# EUROPÄISCHE PATENTSCHRIFT

(11) **EP 0 491 236 B1**
(45) Veröffentlichungstag und Bekanntmachung des Hinweises auf die Patenterteilung: **15.11.1995**
(21) Anmeldenummer: 91120817.1
(22) Anmeldetag: 04.12.1991
(51) Int. Cl.: G05D 16/06

(54) **Druckregler**
Pressure regulator
Régulateur de pression

(30) Priorität: 18.12.1990 DE 9017080 U
(43) Veröffentlichungstag der Anmeldung: 24.06.1992
(73) Patentinhaber: MESSER GRIESHEIM GMBH, D-60270 Frankfurt (DE)
(72) Erfinder: Elsner, Peter, W-6000 Frankfurt/Main 71 (DE); Linz, Dieter, W-6232 Bad Soden (DE)

(56) Entgegenhaltungen:
- DE-A- 2 545 612
- FR-A- 793 460
- FR-A- 2 004 724
- US-A- 2 650 455

## Beschreibung

Die Erfindung betrifft einen Druckrelger mit einem Gehäusegrundkörper, in dem ein einen Ventilsitz und einen beweglichen Ventilkörper aufweisendes Ventil angeordnet ist, dessen Eingang mit einer Hochdruckleitung und dessen Ausgang mit einem Niederdruckraum in Verbindung steht.

Um eine hohe Betriebssicherheit bei gleichzeitiger langer Lebensdauer von Druckreglern gewährleisten zu können, werden zwischen der Eingangsseite des Druckreglers und dem Ventil mechanische Filter vorgesehen, mittels denen vor dem Ventilsitz und dem Ventilkörper Partikel zurückgehalten werden. Bei Druckreglern, die in der Brennschneidtechnik eingesetzt werden ist es üblich, daß der das Ventil aufnehmende Ventilraum neben dem Eingang für die Hochdruckleitung noch eine Verbindungsbohrung zum Manometer aufweist. Indem man den Ventilkörper mit einem topfähnlichen Zentralfilter umgibt, dessen offene Stirnseite an der den Ventilsitz aufweisenden Fläche anliegt, verhindert man, daß Partikel aus beiden Verbindungsöffnungen zu dem Ventil gelangen. Dabei wird durch die topfförmige Ausgestaltung des Zentralfilters eine große Filteroberfläche geschaffen, durch die die beim Brennschneiden erforderliche Gasmenge strömen kann.

Problematisch an diesem einstückig ausgebildeten topfförmigen Filter ist dessen Montage, die erst nach dem Einsetzen des Ventilkörpers erfolgen kann. Der Ventilkörper ist im wesentlichen schief in dem ihn aufnehmenden Raum des Gehäusegrundkörpers angeordnet, so daß ein automatisches Einführen des topfförmigen Zentralfilters nicht mehr möglich ist.

Aufgabe der Erfindung ist es daher, die Montage des Ventilkörpers und des Zentralfilters zu vereinfachen.

Diese Aufgabe wird erfindungsgemäß durch die kennzeichnenden Merkmale des Anspruches 1 gelöst.

Vorteilhafte Weiterbildungen der Erfindung sind in den Unteransprüchen angegeben.

Dadurch daß der Zentralfilter aus mindestens zwei separaten Teilen besteht, von dem das eine Teil eine hohlzylindrische Form aufweist, wird es nunmehr vorteilhaft möglich, zuerst dieses hohlzylindrische Teil in dem den Ventilkörper aufnehmenden Raum anzuordnen und anschließend den Ventilkörper zu montieren. Hierbei wird der Ventilkörper im Inneren des hohlzylindrischen Teils des Zentralfilters geführt und kann nach dessen Montage automatisch zusammen mit der Schließfeder eingesetzt werden. Anschließend wird das hohlzylindrische Teil des Zentralfilters mit einem plattenförmigen Teil abgedeckt, so daß eine im wesentlichen geschlossene topfförmige Form erreicht wird.

Die Montage geschieht vorteilhaft über eine koaxial zum Ventilsitz und zu dem Ventilkörper verlaufende Stufenbohrung des Gehäusegrundkörpers. Diese weist einen Raum zur Aufnahme des hohlzylindrischen Teiles auf, der über einen Ringflansch in einen Raum mit größerem Durchmesser übergeht. Auf dem Ringflansch ist das plattenförmige Teil angeordnet, das mit der Stirnseite des hohlzylindrischen Teiles in Verbindung steht. Der größere Raum weist weiterhin ein Gewindeteil auf, in das ein Halteelement einschraubbar ist, das nach der Montage mit dem plattenförmigen Teil in Kontakt steht. Über einen Flansch wirkt das Halteelement nach dem Einschrauben in den Gehäusegrundkörper auf ein Dichtelement, beispielsweise eine O-Ringdichtung, und verschließt diese Öffnung gasdicht gegenüber der Atmosphäre.

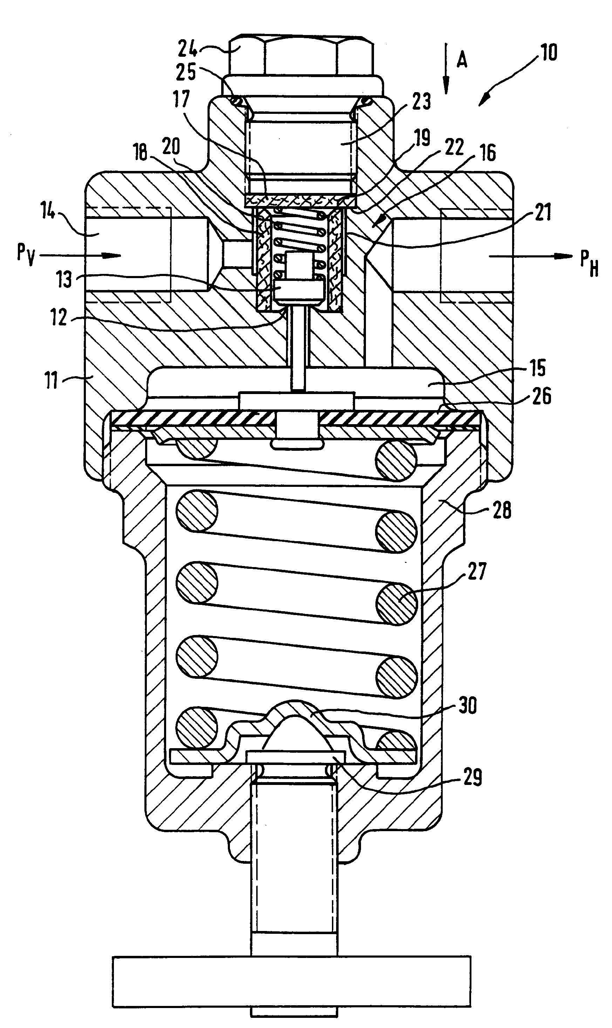

In der Zeichnung ist ein an sich bekannter Druckregler 10 dargestellt, der im wesentlichen aus einem Gehäusegrundkörper 11 besteht, der zusammen mit einer federbelasteten Nie derdruckmembran 26 einen Niederdruckraum 15 begrenzt und in dem ein einen Ventilsitz 12 und einen beweglichen Ventilkörper 12 aufweisendes Ventil angeordnet ist, dessen Eingang mit einer Hochdruckleitung 14 und dessen Ausgang mit dem Niederdruckraum 15 in Verbindung steht. Die an sich bekannte Stellfeder für die Niederdruckmembran 26 ist mit 27, das entsprechende Federgehäuse mit 28, das Einstellelement mit 29 bezeichnet. Zwischen dem Einstellelement 29 und der Stellfeder 27 für die Niederdruckmembran 26 ist eine Verbindungsscheibe vorgesehen.

In der Zeichnung ist das aus Ventilkörper 13 und Ventilsitz 12 bestehende Ventil in geschlossenem Zustand dargestellt. Der Ventilkörper 13 besteht nach einer Ausführungsform aus einem im wesentlichen stufenförmig ausgebildeten Element mit flächiger Abdichtseite. Der Ventilsitz 12 ist einstückig im Gehäusegrundkörper 11 ausgebildet. Der den Ventilkörper umgebende Zentralfilter 16 besteht im wesentlichen aus einem hohlzylindrischen Teil 18, das sich über den Eingang der Hochdruckleitung 14 erstreckt und mit seiner einen Stirnseite an der den Ventilsitz 12 aufweisenden Wand des Gehäusegrundkörpers 11 angeordnet ist. Dieser hohlzylindrische Teil 18, der selbstverständlich auch aus mehreren Teilstücken zusammengesetzt sein kann, wird vor dem Ventilkörper in der in dem Gehäusegrundkörper 11 vorgesehene Stufenbohrung 21 angeordnet. Dies kann durch grandliniges Einführen des Teil 18 in den Raum für das Ventil automatisch erfolgen. Nach der Montage des Teils 18 wird der Ventilkörper 13 mit der Schließfeder 20 eingesetzt. Nun wird der plattenförmige Teil 17 des Zentralfilters 16 auf den Ringflansch 22 der Stufenbohrung 21 aufgelegt. Dieser plattenförmige Teil 17 steht in Kontakt mit der Stirnseite 19 des hohlzylindrischen Teiles 18. In das eingangsseitig in der Stufenbohrung 21 vorgesehene Gewindeteil 23 wird ein Halteelement 24 eingeschraubt bis dieses Halteelement 24 mit dem plattenförmigen Teil 17 des Zentralfilters 16 in Kontakt steht. Das Halteelement 24 weist weiterhin einen Flansch auf, der nach dem Einschrauben mit einem Dichtelement 25 in Verbindung steht und die Stufenbohrung 21 gegenüber Atmosphäre gasdicht abdichtet.

Durch die Ausbildung des Zentralfilters 16 aus zwei separaten Teilen wird vorteilhaft eine automatische Montage des Druckreglers möglich, weil zuerst der hohlzylindrische Teil des Zentralfilters in dem Ventilraum angeordnet werden kann. Die nachfolgende Montage des Ventilkörpers und der Schließfeder 20 wird durch axiales Einführen in die den Niederdruckraum 15 mit dem Ventilraum verbindenden Bohrung erreicht. Über ein Abdecken der dem Ventilsitz gegenüberliegenden Öffnung des einen Filterteils 18 wird der gesamte Ventilraum von einem Filter abgedeckt.

## Patentansprüche

1. Druckregler mit einem Gehäusegrundkörper, in dem ein einen Ventilsitz und einen beweglichen Ventilkörper aufweisendes Ventil angeordnet ist, dessen Eingang mit einer Hochdruckleitung und dessen Ausgang mit einem Niederdruckraum in Verbindung steht, dadurch gekennzeichnet,
daß der Ventilkörper (13) von einem Zentralfilter (16) umgeben ist, der mindestens aus zwei separaten Teilen (17,18) besteht und das eine Teil (18) eine hohlzylindrische Form aufweist, innerhalb der der Ventilkörper (13) im wesentlichen gerade ausgerichtet angeordnet ist.

2. Druckregler nach Anspruch 1,
dadurch gekennzeichnet,
daß das andere Teil (17) eine im wesentlichen plattenförmige Form aufweist und der dem Ventilsitz (12) entgegengesetzten Stirnseite (19) des einen Teils (18) zugeordnet ist und diese abdeckt.

3. Druckregler nach Anspruch 1 oder 2,
dadurch gekennzeichnet,
daß der Zentralfilter zwischen Hochdruckleitung (14) und Ventil (12,13) angeordnet ist.

4. Druckregler nach einem der Ansprüche 1 bis 3,
dadurch gekennzeichnet,
daß innerhalb des hohlzylindrischen Teiles (18) eine Schließfeder (20) angeordnet ist, die sich an dem plattenförmigen Teil (17) abstützt.

5. Druckregler nach einem der Ansprüche 1 bis 4,
dadurch gekennzeichnet,
daß in dem Gehäusegrundkörper (11) eine Stufenbohrung (21) zur Aufnahme des hohlzylindrischen Teiles (18) vorgesehen ist, auf deren Ringflansch (22) das plattenförmige Teil (17) angeordnet ist und die ein Gewindeteil (23) aufweist, in das ein in Kontakt mit dem plattenförmigen Teil (17) bringbares Haltelement (24) einschraubbar ist.

6. Druckregler nach einem der Ansprüche 1 bis 5,
dadurch gekennzeichnet,
daß zwischen dem Halteelement (24) und dem Gehäusegrundkörper (11) ein Dichtelement (25) angeordnet ist.

## Claims

1. Pressure regulator having a main housing body in which a valve having a valve seat and a movable valve body is disposed, whose inlet is connected to a high-pressure line and whose outlet is connected to a low-pressure line, characterized in that the valve body (13) is surrounded by a central filter (16) which comprises at least two separate parts (17, 18), one part (18) having a hollow-cylindrical shape, inside which the valve body (13) is disposed so as to be aligned in an essentially straight manner.

2. Pressure regulator according to Claim 1, characterized in that the other part (17) has an essentially plate-like shape and is assigned to that end face (19) of the one part (18) which is opposite the valve seat (12) and covers it.

3. Pressure regulator according to Claim 1 or 2, characterized in that the central filter is disposed between high-pressure line (14) and valve (12, 13).

4. Pressure regulator according to one of Claims 1 to 3, characterized in that there is disposed inside the hollow-cylindrical part (18) a closing spring (20) which rests against the plate-like part (17).

5. Pressure regulator according to one of Claims 1 to 4, characterized in that, to receive the hollow-cylindrical part (18), there is provided in the main housing body (11) a stepped bore (21) on whose annular flange (22) the plate-like part (17) is disposed and which has a threaded part (23) into which a holding element (24) can be screwed which can be brought into contact with the plate-like part (17).

6. Pressure regulator according to one of Claims 1 to 5, characterized in that a sealing element (25) is disposed between the holding element (24) and the main housing body (11).

## Revendications

1. Régulateur de pression composé d'un corps de base formant boîtier dans lequel est logée une soupape formée d'un siège de soupape et d'un corps de soupape essentiellement mobile, dont l'entrée est reliée à une conduite haute pression et la sortie à une chambre basse pression, caractérisé en ce que le corps de soupape (13) est entouré par un filtre central (16) composé d'au moins deux pièces distinctes (17, 18) et la pièce (18) présente une forme de cylindre creux à l'intérieur duquel le corps de soupape (13) est aligné de manière essentiellement droite.

2. Régulateur de pression selon la revendication 1, caractérisé en ce que l'autre pièce (17) est essentiellement en forme de plaque et est associée à la face frontale (19) de la partie (18), du côté opposé au siège de soupape (12), pour recouvrir cette partie.

3. Régulateur de pression selon la revendication 1 ou 2, caractérisé en ce que le filtre central est monté entre la conduite haute pression (14) et la soupape (12, 13).

4. Régulateur de pression selon l'une des revendications 1 à 3, caractérisé par un ressort d'obturation (20) logé dans la pièce cylindrique creuse (18), ce ressort s'appuyant contre la pièce (17) en forme de plaque.

5. Régulateur de pression selon l'une des revendications 1 à 4, caractérisé en ce que le corps de base (11) formant le boîtier comporte un perçage étagé (21) pour recevoir la pièce cylindrique creuse (18), et l'épaulement annulaire (22) de ce perçage reçoit la pièce (17) en forme de plaque, le perçage étant muni d'une partie filetée (23) dans laquelle se visse un élément de fixation (24) qui peut être mis en contact avec la pièce (17) en forme de plaque.

6. Régulateur de pression selon l'une des revendications 1 à 5, caractérisé par un élément d'étanchéité (25) prévu entre l'élément de fixation (24) et le corps de base (11) du boîtier.
